# EUROPEAN PATENT APPLICATION

(11) **EP 2 116 939 A1**
(43) Date of publication of application: **11.11.2009**
(21) Application number: 07785462.8
(22) Date of filing: 27.08.2007
(51) Int. Cl.: G06F 17/00

(54) **WEB PAGE DISPLAYING METHOD AND SYSTEM**

(30) Priority: 14.12.2006 CN 200610165895
(71) Applicant: Alibaba Group Holding Limited, Grand Cayman (KY)
(72) Inventor: JIA, Zhiming, Zhejiang 310099 (CN); FAN, Li, Zhejiang 310099 (CN)
(74) Representative: Grünecker, Kinkeldey, Stockmair & Schwanhäusser Anwaltssozietät
(86) International application number: PCT/CN2007/070565
(87) International publication number: WO 2008/071097

(57) **Abstract**

Disclosed is a method for displaying a web page. According to the method, upon receiving a data block including web page display data from a server, a client stores a data block identifier and a correspondence relationship between the data block identifier and the data block. The client then uses the identifier of the needed data block to determine whether the needed data block identifier is stored in the client, if affirmative, obtains the data block corresponding to the found data block identifier according to the correspondence relationship, and displays the web page display data of the obtained data block on a web page. Further discloses a system for displaying a web page. The disclosed method and system can be used to greatly reduce the pressure on a server end, save network bandwidth resources, and improve a client's speed for displaying a web page.

## Description

This application claims priority from Chinese patent application, Application No. 200610165895.X, filed in Chinese Patent Office on December 14, 2006, entitled "METHOD AND SYSTEM FOR DISPLAYING WEB PAGE", and incorporates the Chinese patent application in its entirety by reference.

### TECHNICAL FIELD

The present invention relates to fields of IP networking technologies, and particularly methods and systems for displaying web page.

### BACKGROUND ART

Existing technologies, such as Ajax (i.e., Asynchronous Javascript And XML) request technology, have provided capability of asynchronous communication with a server, and allowed a browser to provide more natural browsing experience to users. The core of Ajax is a JavaScript data request object (i.e., XMLHttpRequest) which supports an asynchronous request. This object was first introduced in Internet Explorer 5. XMLHttpRequest allows a client to submit a request to a server and processes a feedback from the server using JavaScript without hindering the associated user.

When a user of a client visits a certain website and inputs a URL (Uniform Resource Location) identifier in an address field of a browser, the client obtains request configuration information from a record file (e.g., cookie) stored therein, and sends a data request the including the request configuration information to a server. Upon receiving the data request, the server parses the data request, obtains the requested data from a data source, and sends the requested data after packing the requested data in XML (Extensible Markup Language) format. Upon receiving the requested XML formatted data from the server, the client unpacks the XML formatted data to obtain the requested data. The client then executes a relevant JavaScript code to display the requested data on a web page.

If the client needs to obtain new data from the server due to a user operation on the web page, the client updates the request configuration information in the cookie, obtains the new data from the server by sending a data request, and displays the obtained new data on the web page. If the user closes the web page and subsequent reopens the web page, the client obtains the updated request configuration information from the cookie stored therein, sends a data request having the updated request configuration information to the server to obtain data for displaying the present web page's contents, and then displays the entire contents for the web page.

If the user moves from the present web page to another web page, and the client later returns to the present web page from the another web page, the client needs to again establish a connection with the server, obtain data for displaying the present web page's contents from the server, and display the web page's contents. If the user refreshes the present web page, the client will also again need to obtain data for displaying the present web page's contents from the server, and display the entire contents for the web page.

Existing technologies such as Ajax have the following major deficiencies:
1. Each time when a client needs to obtain data, the data is obtained from a server end. This places a high pressure on the server end, uses more network bandwidth resources, and has a slower speed for displaying the data.
2. Upon receiving various requested data from a server, a client needs to execute different Javascript codes that have been pre-stored locally in order to display the requested data in respective positions on a web page. This imposes a high workload on the client.
3. A server needs to pack data requested by a client in XML format before sending the data to the client. Upon receiving the requested data in XML format from the server, the client needs to unpack the XML formatted data in order to obtain the requested data. A large amount of loaded resources are required for packing and unpacking the data in XML format.

### DESCRIPTION OF THE INVENTION

The present invention provides a method and a system for displaying a web page. The invention aims to solve the problems of higher pressure on a server end and large resource usage of network bandwidth. These problems are inherent in existing technologies which require a client to obtain data from the server each time when the client obtains the data.

The method provided by the present invention includes the following steps:
A. Upon receiving a data block including web page display data from a server, a client stores a data block identifier and a correspondence relationship between the data block identifier and the data block.
B. The client determines whether the data block identifier of a needed data block is stored in the client. If it does, the client obtains the data block corresponding to the found data block identifier based on the correspondence relationship, and displays the web page display data of the obtained data block on a web page.

At the above step B, if the obtained data block has an executable code, the client displays the web page display data of the obtained data block on the web page by executing the executable code.

At the above step A, the data block identifier and the correspondence relationship between the data block identifier and the data block are stored in a dynamic cache.

The step A may further store a web page identifier and a correspondence relationship between the web page identifier and its data block. In this case, the method further includes the following step:

Upon receiving a login request including a web page identifier from a user, the client determines whether the web page identifier is stored in the client, and if it is, obtains the data block corresponding to the found web page identifier based on the correspondence relationship, and displays the web page display data of the obtained data block on the web page.

If the data block identifier is not stored in the client, the client obtains the data block corresponding to the data block identifier from the server, and displays the web page display data of the obtained data block on the web page.

If the web page identifier is not stored in the client, the client obtains the data block corresponding to the web page identifier from the server, and displays the web page display data of the thus obtained data block on the web page.

Further, that method may delete the stored data block identifier and the correspondence relationship between the data block identifier and the data block after the client's browser is closed.

Furthermore, the method may delete the stored data block identifier, the correspondence relationship between the data block identifier and the data block, the web page identifier, and the correspondence relationship between the web page identifier and the data block, after the client's browser is closed.

The system provided by the present invention includes a client and a server as follows.

The client is used for receiving a data block having web page display data from a server, storing a data block identifier and a correspondence relationship between the data block identifier and the data block, and for determining whether the data block identifier of the needed data block is stored in the client. If the data block identifier is stored in the client, the client obtains the data block corresponding to the data block identifier based on the correspondence relationship, and displays the web page display data of the obtained data block on a web page.

The server is used for providing the data block to the client.

The client includes a receiving unit, a browser, and a cache unit described as follows.

The receiving unit is used for receiving the data block including the web page display data from the server, and storing the data block identifier and the correspondence relationship between the data block identifier and the data block into the cache unit.

The browser is used for searching the cache unit for the data block identifier of the needed data block identifier. If the data block identifier is found, the browser obtains the data block corresponding to the found data block identifier based on the correspondence relationship, and displays the web page display data of the obtained data block on the web page.

The cache unit is used for storing the data block identifier and the correspondence relationship between the data block identifier and the data block.

The browser includes a display unit used for displaying the web page display data of the data block on the web page by executing an executable code in case the data block has such an executable code.

The receiving unit may be further used for storing a web page identifier and a correspondence relationship between the web page identifier and its data block into the cache unit. In this case, the browser may be further used for receiving from a user a login request including a web page identifier, and searching the cache unit for the web page identifier. If the webpage identifier is found, the browser may obtain a data block corresponding to the web page identifier based on the correspondence relationship, and display the web page display data of the obtained data block on the web page.

The browser is further used for obtaining the data block corresponding to the data block identifier from the server if the data block identifier is not found, and for displaying the web page display data of the thus obtained data block on the web page.

The browser is further used for obtaining the data block corresponding to the web page identifier from the server if the web page identifier is not found, and for displaying the web page display data of the thus obtained data block on the web page.

The client may further include a first deleting unit used for deleting the data block identifier and the correspondence relationship between the data block identifier and the data block that are stored in the cache unit after the browser is closed.

The client may further include a second deleting unit used for deleting the data block identifier, the correspondence relationship between the data block identifier and the data block, the web page identifier, and the correspondence relationship between the web page identifier and its data block that are stored in the cache unit after the browser is closed.

In the present invention, upon receiving from a server a data block containing web page display data, a client stores an associated data block identifier and a correspondence relationship between the data block identifier and the data block. If the client needs to obtain data later, the client first determines whether the respective data block identifier is stored in the client. If it does, the client locally obtains the needed data block corresponding to the data block identifier according to the correspondence relationship. The client obtains the data block from the server only when the corresponding data block identifier is not stored in the client. This allows the server to be requested only as needed, resulting in a great relief to the pressure on the server end, and saving the network bandwidth resources to improve the client's speed for displaying a web page.

When the client stores the data block identifier and the correspondence relationship between the data block identifier and the data block using dynamic caching, the number and the size of the cache memories can be freely defined by a programmer, with the upper bound being the client's cache size. Therefore, the size of the cache may be defined to be very large so that a very high hit rate may be achieved for data stored in the cache. This can reduce the pressure on the server, and save much network bandwidth resource.

In addition, if the server-returned data block containing the web page display data is an executable code, the server and the client are not required to pack and unpack the requested data in XML format. This saves a great number of loaded resources and time. The client directly executes the executable code to display the web page and does not require a large number of executable codes to be locally pre-stored for displaying web page, thus greatly relieving the pressure on the client.

### DESCRIPTION OF DRAWINGS

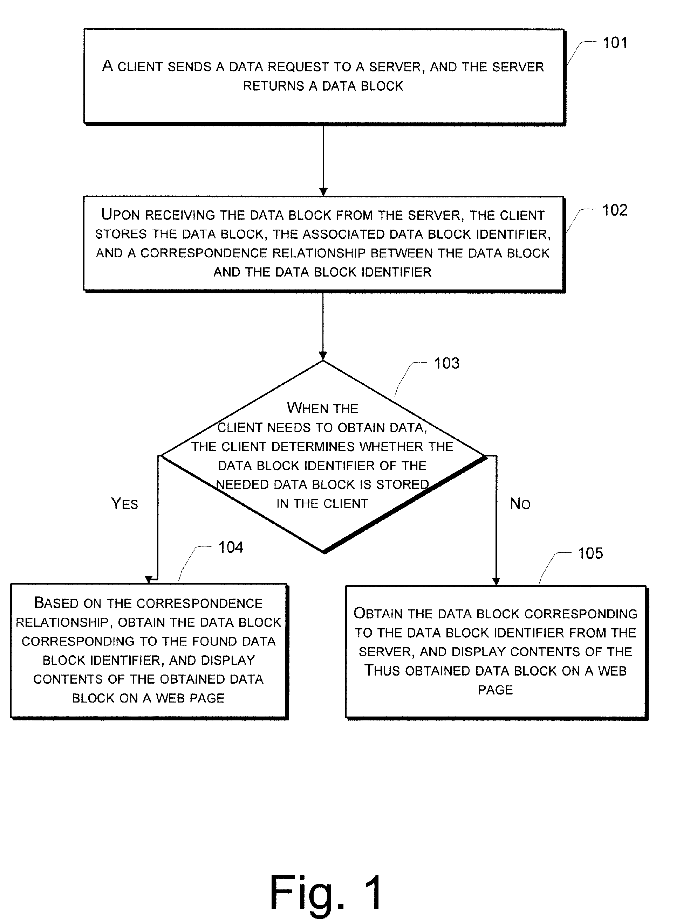

FIG. 1 shows a flow chart of a method in accordance with the present invention.
FIG. 2 shows a schematic structural diagram of a system in accordance with the present invention.

### EXEMPLARY EMBODIMENTS

The present invention provides a method for displaying a web page, which in one embodiment includes the following procedures:
Block 101: A client sends a data request to a server, which returns a data block.
   When a user of the client needs to visit a certain website and inputs a URL in an address field of a browser, the client obtains request configuration information stored in the client, and sends a data request including the request configuration information to a server. Upon receiving the data request, the server parses the data request, obtains requested data from a data source, and sends a data block including the web page display data requested by the client to the client. Due to considerations of compatibility and efficiency, the data block may be a piece of executable code implemented in a Javascript object.
Block 102: Upon receiving the data block returned from the server, the client stores the data block, an associated data block identifier, and a correspondence relationship between the data block identifier and the data block.
   Upon receiving the data block from the server, the client stores the data block in the browser's cache. If the data block is a piece of executable code, the client displays the web page display data of the data block on a web page by executing the executable code. If the data block is data packed in XML format, the client unpacks the XML formatted data, and displays the web page display data of the data block on a web page by executing a relevant executable code that has been stored locally in advance.
   Here, the browser cache may be implemented in a dynamic form, and stores data with the help of certain data structure such as dynamic array and queue. The cache is a data storage space based on a browser process. Specifically, the data that is stored in the cache will continue to exist as long as the current browser process is not terminated, or the browser displaying the present web page is not closed.
   Also, the cache size may be freely set according to the size and the hit rate of associated application. The cache size may be set to be very large, with the upper bound being the client's internal memory size.
Block 103: When later the client needs to obtain data, the client uses the data block identifier of the needed data block to determine whether the data block identifier is stored in the client. If the data block identifier is stored in the client, the process continues to Block 104. Otherwise, the process proceeds to Block 105.
Block 104: If the client has the needed data block identifier, the client obtains the data block corresponding to the found data block identifier based on the correspondence relationship, and displays the web page display data of the obtained data block on the web page.
   That is, if the client needs to obtain data used for displaying contents of the web page, the client searches the data blocks stored therein first for the required data.
   For example, if the client needs to obtain new data due to a user operation on the present web page, the client first searches the browser's cache for the data block identifier of the needed data block. If the data block identifier is found, this indicates that the cache has the data block required by the user. The client then obtains the data block corresponding to the found data block identifier using the stored corresponding relationship in Block 102, and displays the web page display data of the obtained data block on the web page. Because the entire search is based upon a certain data structure, and is performed within the client's internal memory, the speed and efficiency far surpass that of regular data acquisition by requesting a server. Once the required data block is found, the browser may then parse and execute the data block to display the contents of the data block on the web page.
   Preferably, block 102 also stores a web page identifier and a correspondence relationship between the web page identifier and the data block, in addition to storing the data block, the data block identifier, and the correspondence relationship between the data block identifier and the data block. Such data may also be stored in the browser cache. One web page identifier may correspond to multiple data blocks, and the webpage identifier may use URL format.
   In this case, if the user moves from the present web page to another web page, and then from the another web page back to the present web page, the client receives a login request including a web page identifier of the present web page. The client determines whether the web page identifier is stored in the client. If yes, the client obtains a data block corresponding to the web page identifier based on the correspondence relationship, and displays web page display data of the data block on the web page. In this process, the client does not need to re-establish a connection with the server to obtain the data from the server. This reduces the pressure on the server end, alleviates the resource usage of network bandwidth, and increases the speed of data displaying. If the client does not have the web page identifier, the client obtains the data block that corresponds to the web page identifier from the server, and displays the web page display data of the thus obtained data block on the web page.
   Similarly, if the user refreshes the present web page, the client does not need to obtain the data from the server, but rather only needs to obtain the data block that corresponds to the web page identifier of the present web page from the browser's cache, and displays the web page display data of the thus obtained data block on the present web page.
Block 105: If the client does not have the needed data block identifier stored therein, the client obtains the data block corresponding to the data block identifier from the server, and displays the web page display data of the obtained data block on the web page.
   As the client concludes that the data block identifier is not stored in the client in Block 103, the client would need to send a data request to the server which will then return to the client the required data block in a certain format. Here, the format is in essence a type of protocol, and does not refer to any specific file type. The only requirement is to have the client and the server reach an agreement so as to ensure correct recognition and parsing. In Ajax, the format used is usually XML. In a practical operation, however, using XML may not be a good approach considering the high resource usage required for interpreting the XML format. As returned data is used by the client, objectifying the data using Javascript may be an optimal option. The browser is then responsible for taking the subsequent actions including interpreting, executing, and displaying the web page.

While displaying the data, the client stores new data blocks and new data block identifiers sent from the server, as well as the correspondence relationships between the new data block identifiers and the data blocks, into the cache for use in next request. The client updates the request configuration information in the cookie so that the request configuration information used for requesting the data is stored in the cookie. If the user closes the browser and reopens the present web page the next time, the client obtains the updated request configuration information from the cookie stored therein, sends a data request including the request configuration information to the server to obtain the data block including the requested web page display data, and then displays the contents of the web page.

Furthermore, the stored data continues to remain in the dynamic browser cache so long as the browser is not closed. If the user moves from the present web page to a subsequent web page, and if a part of data needs to be displayed in the subsequent page is the same as that of the present web page, the client may reuse the data that has been stored in the browser's dynamic cache when displaying the subsequent web page, thus improving the associated performance of the client.

Because of the size limitation of the cache, the data in the browser cache may need to be deleted when the browser is closed so that the cache can be used next time when the browser is opened.

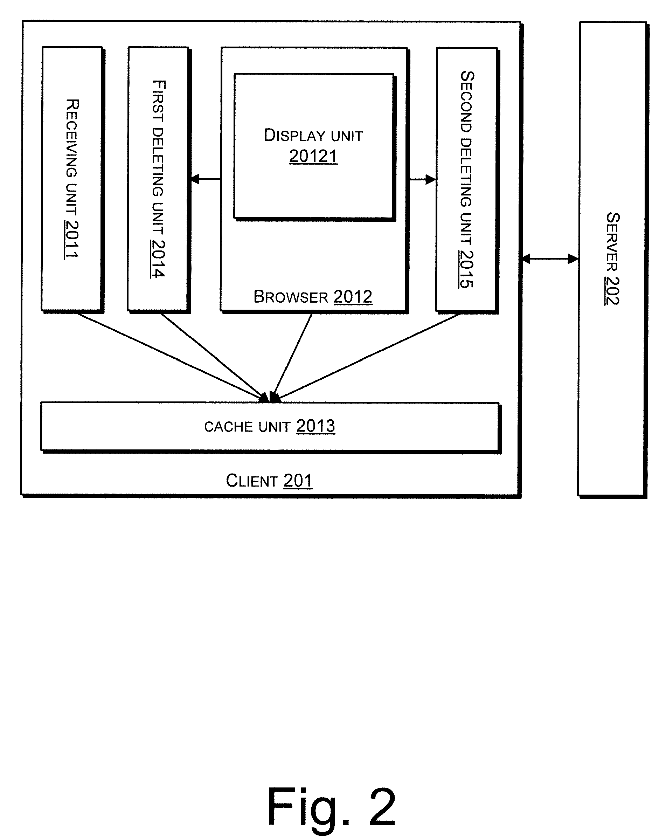

Referring to FIG. 2, the present invention further provides a system for displaying a web page. The system includes a client 201 and a server 202. The client 201 is used for receiving a data block including web page display data from the server 202, and storing a data block identifier and a correspondence relationship between the data block identifier and the data block. The client 201 is also used for determining whether the data block identifier of a needed data block is stored therein. If affirmative, the client 201 obtains the data block corresponding to the found data block identifier based on the correspondence relationship, and displays the web page display data of the data block on a web page. The server 202 is used for providing the data block to the client 201.

The client 201 includes a receiving unit 2011, a browser 2012, and a cache unit 2013. The receiving unit 2011 is used for receiving the data block including the web page display data from the server 202, and storing the data block identifier and the correspondence relationship between the data block identifier and the data block into the cache unit 2013. The browser 2012 is used for searching the cache unit for the data block identifier of the needed data block. If found, the browser 2012 obtains the data block corresponding to the found data block identifier based on the correspondence relationship, and displays the web page display data of the data block on the web page. The cache unit 2013 is used for storing the data block identifier and the correspondence relationship between the data block identifier and the data block.

The browser 2012 includes a display unit 20121 used for displaying the web page display data of the data block on the web page by executing an executable code in case where the data block contains such an executable code.

The receiving unit 2011 is further used for storing a web page identifier and a correspondence relationship between the web page identifier and the data block into the cache unit 2013. Accordingly, the browser 2012 is further used for receiving a login request including the web page identifier from a user, and searching the cache unit 2013 for the web page identifier. If the webpage identifier is found, the browser 2012 obtains the data block corresponding to the found web page identifier based on the correspondence relationship, and displays the web page display data of the data block on the web page.

The browser 2012 is further used for obtaining the data block corresponding to the data block identifier from the server 202 if the data block identifier is not found in the client 201, and displaying the web page display data of the thus obtained data block on the web page. The browser 2012 is also used for obtaining the data block corresponding to the web page identifier from the server 202 if the web page identifier is not found in the client 201, and displaying the web page display data of the thus found data block on the web page.

The client 201 further includes a first deleting unit 2014 and a second deleting unit 2015. The first deleting unit 2014 is used for deleting the data block identifier and the correspondence relationship between the data block identifier and the data block that are stored in the cache unit 2013, after the browser 2012 is closed. The second deleting unit 2015 is used for deleting the data block identifier, the correspondence relationship between the data block identifier and the data block, the web page identifier, and the correspondence relationship between the web page identifier and the data block that are stored in the cache unit 2013, after the browser 2012 is closed.

A technician in the art can alter or modify the present invention in many different ways without departing from the spirit and the scope of this disclosure. Accordingly, it is intended that the present invention covers all modifications and variations which fall within the scope of the claims of the present invention and their equivalents.

## Claims

1. A method for displaying a web page, **characterized in that** the method comprises:
A. in a client, upon receiving a data block including web page display data from a server, storing a data block identifier and a correspondence relationship between the data block identifier and the data block; and
B. in the client, determining whether the data block identifier of a needed data block is stored in the client, and if affirmative, obtaining the data block corresponding to the found data block identifier based on the stored correspondence relationship, and displaying web page display data of the obtained data block on a web page.

2. The method as recited in claim 1, **characterized in that** if the obtained data block at step B is an executable code, the client displays the web page display data of the obtained data block on the web page by executing the executable code.

3. The method as recited in claim 1, **characterized in that** the data block identifier and the correspondence relationship between the data block identifier and the data block at step A are stored in a dynamic cache.

4. The method as recited in claim 1, **characterized in that** client further stores at step A a web page identifier and a web data correspondence relationship between the web page identifier and the data block, and the method further comprises:
in the client, upon receiving a login request including a needed web page identifier from a user, determining whether the needed web page identifier is stored in the client, and if affirmative, obtaining a data block corresponding to the found web page identifier based on the web data correspondence relationship, and displaying web page display data of the obtained data block on the web page.

5. The method as recited in claim 1, **characterized in that** if the needed data block identifier is not stored in the client, the client obtains the needed data block corresponding to the found data block identifier from the server, and displays the web page display data of the obtained data block on the web page.

6. The method as recited in claim 4, **characterized in that**, if the needed web page identifier is not stored in the client, the client obtains a data block corresponding to the needed web page identifier from the server, and displays the web page display data of the obtained web data block on the web page.

7. The method as recited in claim 1, **characterized in that** the method further comprises:
after the client's browser is closed, deleting the data block identifier and the correspondence relationship between the data block identifier and the data block that have been stored.

8. The method as recited in claim 4, **characterized in that** the method further comprises:
after the client's browser is closed, deleting the data block identifier, the correspondence relationship between the data block identifier and the data block, the web page identifier, and the web data correspondence relationship between the web page identifier and the data block that have been stored.

9. A system for displaying a web page, **characterized in that** the system comprises:
a client used for receiving a data block including web page display data from a server, storing a data block identifier and a correspondence relationship between the data block identifier and the data block, determining whether a data block identifier of a needed data block is stored therein, and if affirmative, obtaining the data block corresponding to the found data block identifier based on the correspondence relationship, and displaying web page display data of the obtained data block on a web page; and
a server used for providing the data block to the client.

10. The system as recited in claim 9, **characterized in that** the client comprises:
a receiving unit is used for receiving the data block including the web page display data from the server, and storing the data block identifier and the correspondence relationship between the data block identifier and the data block into a cache unit;
a browser used for searching the cache unit for the data block identifier of the needed data block, obtaining the needed data block corresponding to the found data block identifier based on the correspondence relationship, and displaying the web page display data of the obtained data block on the web page; and
the cache unit used for storing the data block identifier and the correspondence relationship between the data block identifier and the data block.

11. The system as recited in claim 10, **characterized in that** the browser comprises:
a display unit used for displaying the web page display data of the obtained data block on the web page by executing an executable code of the data block.

12. The system as recited in claim 10, **characterized in that** the receiving unit is further used for storing a web page identifier and a web data correspondence relationship between the web page identifier and the data block into the cache unit, and that the browser is further used for:
receiving a login request including a needed web page identifier from a user, searching the cache unit for the needed web page identifier, obtaining a data block corresponding to the found web page identifier based on the web data correspondence relationship, and displaying the web page display data of the obtained data block on the web page.

13. The system as recited in claim 10, **characterized in that** the browser is further used for obtaining the needed data block corresponding to the needed data block identifier from the server if the needed data block identifier is not found, and displaying the web page display data of the thus obtained data block on the web page.

14. The system as recited in claim 12, **characterized in that** the browser is further used for obtaining the data block corresponding to the needed web page identifier from the server if the needed web page identifier is not found, and displaying the web page display data of the thus obtained data block on the web page.

15. The system as recited in claim 10, **characterized in that** the client further comprises:
a first deleting unit used for deleting the data block identifier and the correspondence relationship between the data block identifier and the data block that are stored in the cache unit after the browser is closed.

16. The system as recited in claim 12, **characterized in that** the client further comprises:
a second deleting unit used for deleting the data block identifier, the correspondence relationship between the data block identifier and the data block, the web page identifier, and the web data correspondence relationship between the web page identifier and the data block that are stored in the cache unit after the browser is closed.
